Europäisches Patentamt

(19) European Patent Office

Office européen des brevets

(11) Publication number: **0 117 892**
**A1**

(12) **EUROPEAN PATENT APPLICATION**

(21) Application number: **83106384.7**

(22) Date of filing: **30.06.83**

(51) Int. Cl.³: **B 41 J 5/44**
**B 41 J 3/46, B 41 J 25/02**

(30) Priority: **03.03.83 JP 34944/83**

(43) Date of publication of application:
**12.09.84 Bulletin 84/37**

(84) Designated Contracting States:
**DE FR GB**

(71) Applicant: **TOKYO ELECTRIC CO., LTD.**
**6-13, 2-chome, Nakameguro**
**Meguro-ku Tokyo(JP)**

(72) Inventor: **Shimatani, Saburo**
**604-246, Ooana-cho**
**Funabashi-shi Chiba-ken(JP)**

(72) Inventor: **Takahashi, Makoto**
**244-1 Oono, Shuzenji-cho**
**Tagata-gun Shizuoka-ken(JP)**

(74) Representative: **Schmidt-Evers, Jürgen, Dipl.-Ing. et al,**
**Patentanwälte Dipl.-Ing. H. Mitscherlich Dipl.-Ing. K.**
**Gunschmann Dipl.-Ing. Dr.rer.nat. W. Körber Dipl.-Ing. J.**
**Schmidt-Evers Dipl.-Ing. W. Melzer Steinsdorfstrasse 10**
**D-8000 München 22(DE)**

(54) Electronic typewriter.

(57) An electronic typewriter has a text memory (104) for storing a text input by operating a keyboard (124) and a printing format suitable for the text. A number identifying both the text and the printing format is also stored into the text memory (104). Before the printing of the text, the printing format is displayed and may be changed or corrected by a mode control panel (128).

F I G. 3

EP 0 117 892 A1

- 1 -

Electronic typewriter

The present invention relates to an electronic typewriter with a text memory.

A conventional electronic typewriter has a memory for storing text data, i.e., key signals which have been input by operating the keyboard and which represent characters and various functions (e.g., carriage control, etc.). The text is read from the memory and may then be edited or corrected. When the text is supplied to a printing head, it can be printed. In this case, printing format items, such as left and right margins and tab positions, must be set manually by the typist before each printing. Hence, it is difficult to print the text stored in the memory in the same format on a plurality of paper sheets.

The object of the present invention is to provide an electronic typewriter with a memory which stores a plurality of texts and a plurality of printing formats suitable for the respective texts and in which any printing format may be easily changed or corrected.

According to the present invention, there is provided an electronic typewriter which comprises a keyboard having a plurality of keys for generating a key signal representing a character or function designated by a key depressed, a memory for storing a text (i.e., data consisting of key signals from the keyboard), a circuit for writing into the memory a printing format suitable for the text, a printer for printing the text stored in the memory in the printing format also stored in the memory, and a display for displaying the printing format before the printing of the text so that the printing format may be changed or corrected by means of the writing circuit.

This invention can be more fully understood from the following detailed description when taken in conjunction with the accompanying drawings, in which:

Fig. 1 is a perspective view of an electronic typewriter according to the present invention;

Fig. 2 is a plan view of a keyboard and mode control panel of the typewriter shown in Fig. 1;

Fig. 3 is a diagram of a control circuit used in the typewriter shown in Fig. 1;

Fig. 4 shows the structure of a RAM used in the control circuit shown in Fig. 3;

Fig. 5 is a flowchart illustrating how data is stored into the RAM shown in Fig. 4; and

Fig. 6 is also a flowchart showing how data stored in the RAM is printed.

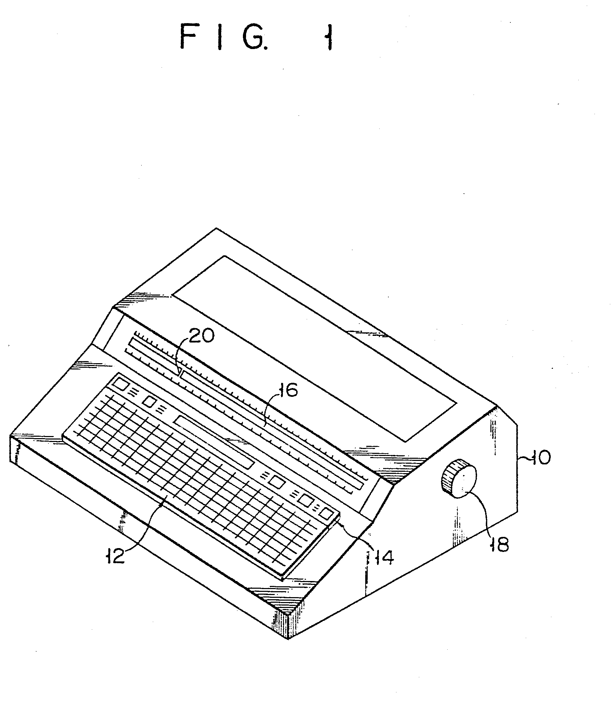

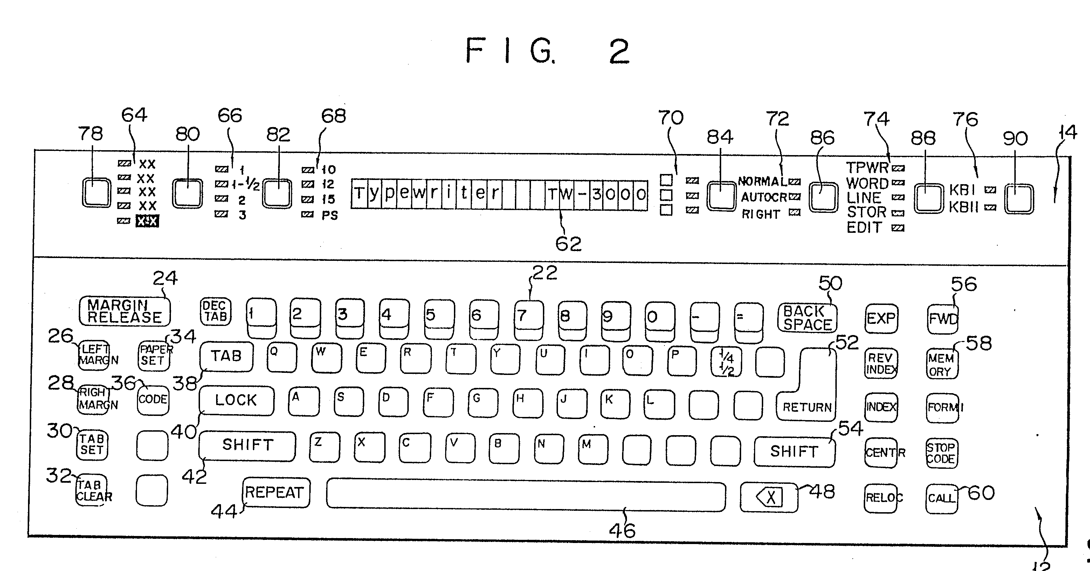

An electronic typewriter according to one embodiment of the present invention will now be described with reference to the accompanying drawings. Fig. 1 is a perspective view of one embodiment of the invention. As shown in Fig. 1, a keyboard 12, a mode control panel 14 and type pitch scales 16 are provided on the front of a housing 10. The mode control panel 14 is so designed as to designate one of various printing formats. Platen knobs 18 are provided on the sides of the housing 10. A cursor 20 indicating the position of a carriage is disposed behind a long, horizontal window which extends between the type pitch scales 16. Fig. 2 is a plan view of the keyboard 12 and mode control panel 14. Character keys 22 assigned to numerals "0" to "9", letters "A" to "Z", various symbols, etc. are arranged on the central portion of the keyboard 12. One group of function keys are arranged on the left end portion of the keyboard 12. These function keys are a margin release key 24, a left margin key 26, a right margin key 28, a tab setting key 30, a tab clear key 32, a paper setting key 34, a code key 36, a tab key 38, a shift lock key 40, a shift key 42, a repeat key 44, etc. A space bar 46 is provided below the lowest row of character keys. Another group of function keys are arranged on the right end portion of the keyboard 12. They are a correction key 48, a back space key 50, a return key 52, a shift key 54, a forward key 56, a memory key 58, a call key 60, etc.

On the mode control panel 14 a 20-character fluorescent display tube 62 is provided to display part of a text being written into a memory, being corrected or being edited. Also on the panel 14 there are provided an LED display 64 for displaying the print mode selected, an LED display 66 for displaying the line space selected, an LED display 68 for displaying the type pitch selected and an LED display 70 for displaying the weight of type (i.e., the hammer impact) desired. Further, on the panel 14 there are provided an LED display 72 for displaying the right margin control mode selected, an LED display 74 for indicating the memory mode selected (i.e., printing mode, data writing mode, etc.) and an LED display 76 for displaying which key, KBI or KBII, has been selected.

Five print modes are provided, any one of which may be chosen. They are: normal print mode, normal/underline print mode, bold print mode, bold/underline print mode and void print mode. Four different line spaces are provided, 1/6 inch, 1/4 inch, 1/3 inch and 1/2 inch. Four type pitches are available: 10 characters per inch, 12 characters per inch, 15 characters per inch and proportional spacing. Three right margin control modes are provided, one of which is chosen. They are: normal mode, automatic carriage return mode and automatic justifying mode.  Five memory modes are available.  They are:  typewriter (TPWR) mode, word mode, line mode, store (STOR) mode and edit mode.

When the typewriter mode is selected, a character is printed upon depression of the corresponding character key.  In this case, the key signal generated from the key depressed is not written into the memory.  When the word mode is chosen, every word typed is written into the memory and then printed upon depression of the space bar 46 or the hyphen key.  Once printed, it is no longer stored in the memory.  When the line mode is selected, every line of characters typed is written into the memory and then printed upon depression of the return key 52.  Once printed, the line is no longer stored in the memory.  When the store mode is selected, every line typed is stored into the memory and then printed upon depression of the return key 52.  In this case, the line is kept stored in the memory even after it is printed. Lines typed after this line are written into the memory and printed in the same manner; in this way the text can be stored and printed.  When the edit mode is selected, no characters can be printed, but the text stored in the memory may be corrected or edited, or both.

Mode selection switches 78, 80, 82, 84, 86, 88 and 90 are arranged beside the LED displays 64, 66, 68, 70, 72, 74 and 76, respectively.

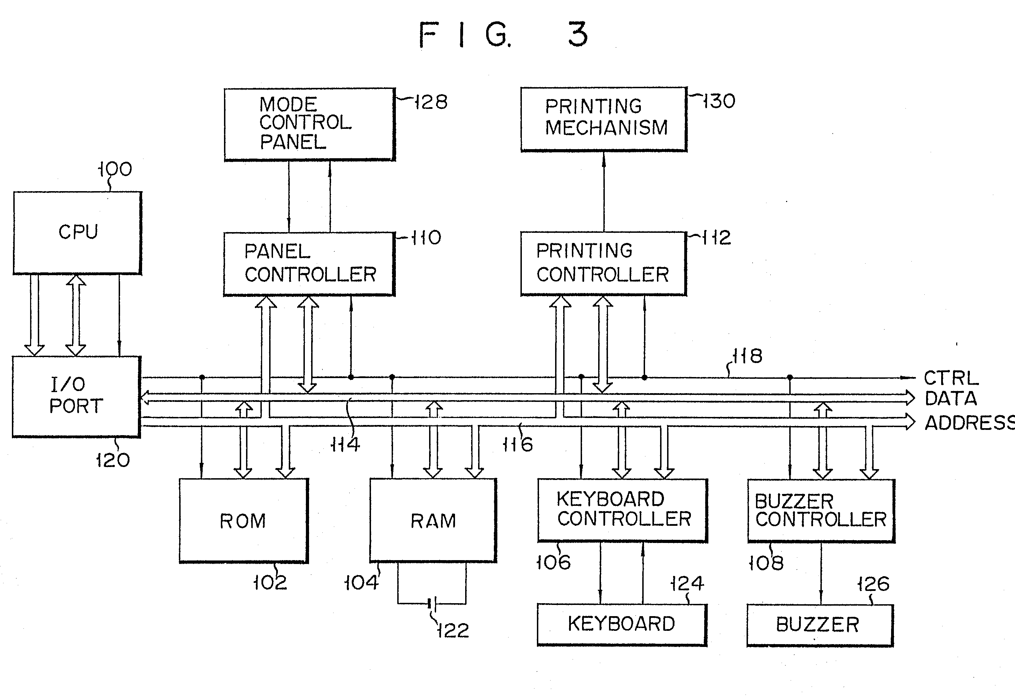

Fig. 3 is a diagram of a control circuit used in the typewriter shown in Fig. 1.  This control circuit has a CPU (central processing unit) 100.  A ROM 102, a RAM 104, a keyboard controller 106, a buzzer controller 108, a panel controller 110 and a printing controller 112 are connected to the CPU 100 through a data bus line 114, an address bus line 116, a control line 118 and an I/O port 120 (or a bus driver).  The program for the CPU 100 is stored in the ROM 102.  The RAM 104 is used to store a text input by operating a keyboard 124 and a printing format selected by operating a mode control panel 128. Power supply for the RAM 104 is backed up by a battery 122. The keyboard 124 is connected to the keyboard controller 106, which is a gate circuit for supplying the CPU 100 with a key signal representing a key depressed by the typist. The buzzer controller 108 is used to drive a buzzer 126. The mode control panel 128 is connected to the panel controller 110 which is used to supply the CPU 100 with output signals from the mode selection switches of the panel 128 and turn the LED displays of the panel 128 on and off. The panel controller 110 has a character generator for converting display data from the CPU 100 into a dot matrix pattern and a sub-CPU for controlling the display of such dot matrix patterns. A printing mechanism 130 including a carriage and a printing head is connected to the printing controller 112. The printing controller 112 has a sub-CPU for controlling the printing.

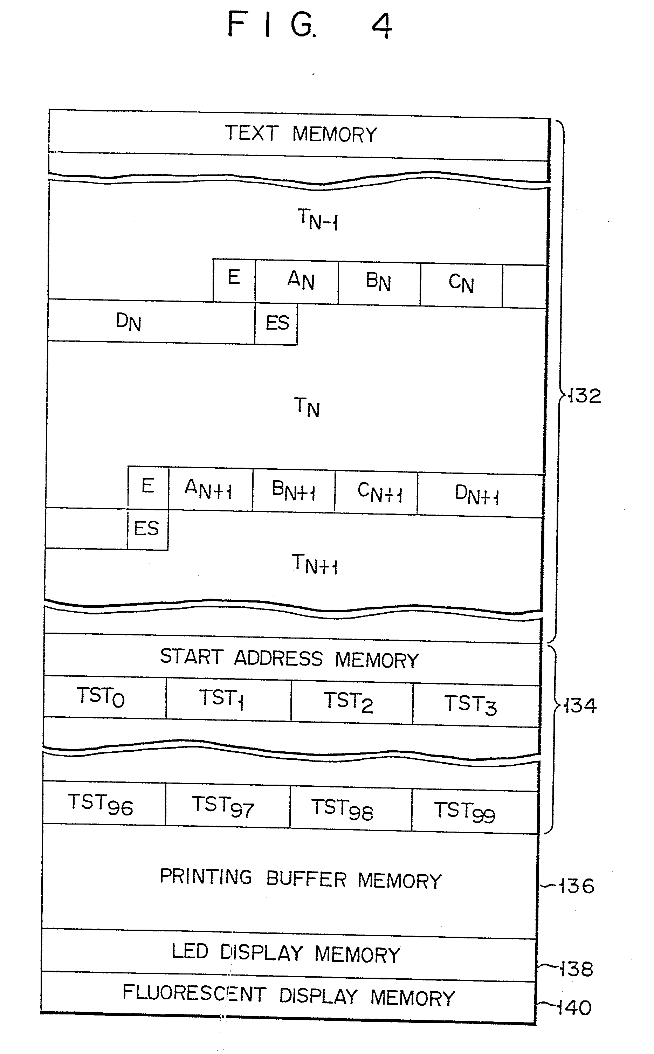

Fig. 4 is a schematic representation of the RAM 104. As shown in this figure, the RAM 104 is comprised of a text memory 132, a start address memory 134, a printing buffer memory 136, an LED display memory 138 and a fluorescent display memory 140.

The text memory 132 stores the printing format data $A_N$, $B_N$, $C_N$ and $D_N$, and text data $T_N$ (N is the number of the text and may range from 0 to 99). At the end of the last item of the format, data ES is stored. At the end of the text data $T_N$, data E is stored. Item $A_N$ is a 1-byte data, the upper four bits of which form line space data and the lower four bits of which form print mode data. Item $B_N$ is also a 1-byte data, the upper four bits of which form impact data (i.e., data representing the weight of type) and the lower four bits of which form type pitch data. Item $C_N$ is also a 1-byte data, the upper four bits of which form right margin control data. Item $D_N$ consists of several bytes representing tab positions and right and left margin positions. Data E and data ES are each a 1-byte data.

Items $A_N$, $B_N$, $C_N$, $D_N$ and the text data $T_N$ form a block of data.

The start address memory 134 stores the address $TST_N$ (2 bytes) of the start address of each block, i.e., item $A_N$ of the format data. The printing buffer memory 136 is used when the text stored in the text memory 132 is printed. It is used also as a buffer memory when the word mode, line mode or store mode is selected. The LED display memory 138 stores data to be used in operating the LED displays of the mode control panel 128, and the fluorescent display memory 140 stores data to be used in operating the fluorescent display tube 62.

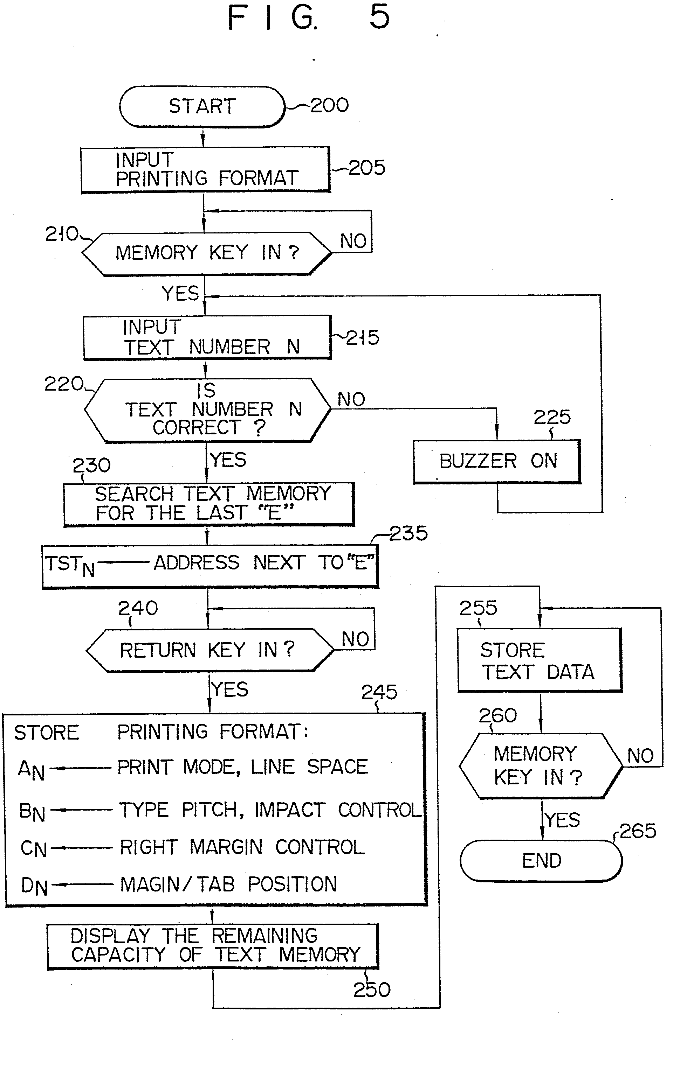

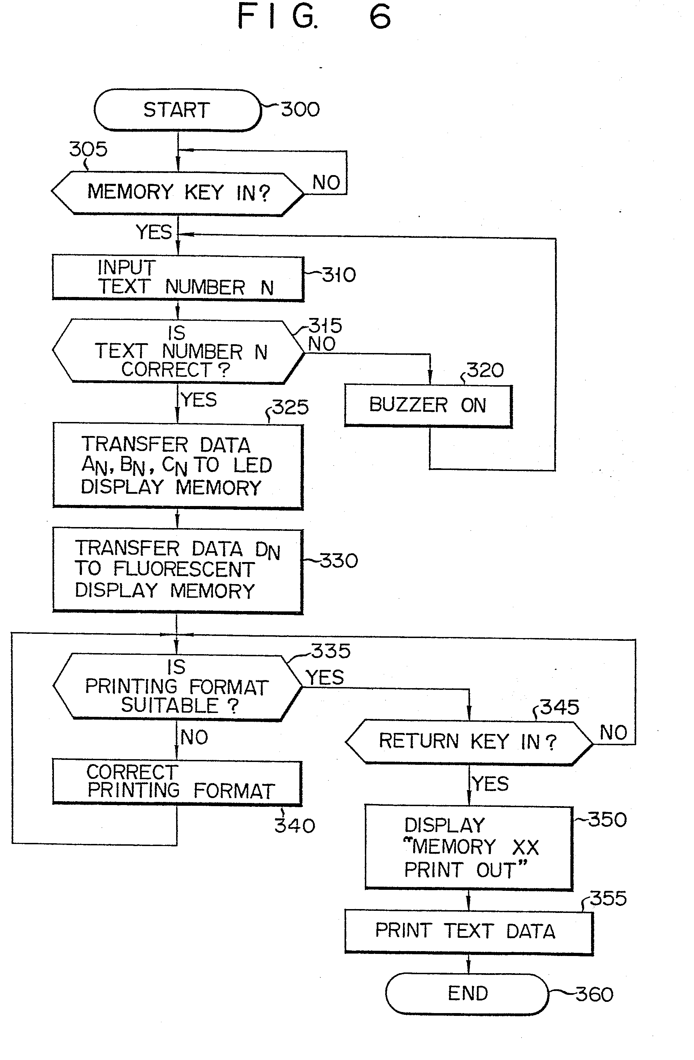

Referring now to the flowcharts shown in Figs. 5 and 6, how a text is written into the RAM 104, how the text is printed, and how a printing format stored in the RAM 104 is changed or corrected will now be described.

First, with reference to Fig. 5 it will be explained how to store a text and printing format when the store mode is selected as a memory mode. First, the typist operates the memory mode selection switch 88, thus selecting the store mode in step 200. In step 205, the typist operates the mode selection switches 78, 80, 82, 84 and 86, thereby selecting the desired print mode, line space, type pitch, printing impact control mode and right margin control mode. These selected items are written into the buffer memory 136 included in the RAM 104, whereby the desired printing format is registered. The typist operates the keyboard 12 to register the left and right margin positions and tab positions. More specifically, the typist depresses the space bar 46, thus moving the carriage to any desired position, and then depresses the left margin key 26 and memory key 58, thus registering the left margin position. The typist operates the space bar 46, right margin key 28, tab setting key 30 and memory key 58 in the same manner, thereby registering the right margin position and tab positions. In step 215, the typist depresses one or two numeral keys, thus inputting the number N (0, 1, 2, ... or 99) to be assigned to a text. In step 220, the question is asked whether or not the text number N is correct. In other words, it is determined that this particular text number is yet to be input, and whether or not this number N is 99 or less. If the answer to the question posed in step 220 is NO, the buzzer 126 is actuated in step 225 to instruct the typist to operate the numeral keys again to input a correct number N. On the other hand, if the answer is YES, the data in the text memory 132 is retrieved in step 230 up to the start address of an empty memory area. Since the first input text, the second input text, the third input text, and so forth are stored at consecutive addresses of the text memory 132, it is sufficient to search for the last data stored in the memory 132, i.e., data E. In step 235, the address following data E is designated as the start address $TST_N$ of the empty memory area in which the data of text No. N is to be written. Thereafter, the typist pushes the return key 52 in step 240. In step 245, the items of a printing format data are read from the buffer memory 136 and then stored into the text memory 132 at the start address $TST_N$ and the addresses following this address $TST_N$. More specifically, item $A_N$ representing the line space and print mode is first stored into the text memory 132. Item $B_N$ representing the type pitch and impact control is then stored. Item $C_N$, i.e., the right margin control data, and item $D_N$, i.e., the margin/tab position data, are then stored. Finally, data ES is stored into the text memory 132. In step 250, the remaining memory capacity of the text memory 132, or the number of characters that can be stored in the memory 132, is displayed by the fluorescent display tube 62.

Thereafter, in step 255, the text typed by the typist is stored into the text memory 132 at the addresses following the address storing data ES. When the typist finishes typing the text, he pushes the memory key 58 in step 260, thereby writing data E in the memory 132 at the end of the text $T_N$. This completes the registration of the printing format and the text $T_N$.

Referring to Fig. 6, the method of printing the text $T_N$ registered in the text memory 132 will now be described. First, in step 300, the typewriter mode, word mode or line mode is selected. In step 305, the memory key 58 is depressed, whereby the flow of process starts. In step 310, the number of the text $T_N$ to be printed, i.e. the number N, is input by depressing one or two numeral keys. In step 315, the question is asked whether or not the number thus input is correct. If the answer to this question is NO, the buzzer 126 is actuated in step 320 to instruct the typist to operate numeral keys again to input a correct number. On the other hand, if the answer is YES, the start address $TST_N$ is read out in step 325. Thereafter, also in step 325, the items of the printing format, i.e., $A_N$, $B_N$ and $C_N$, are transferred from the text memory 132 to the LED display memory 138, and the LED displays 64, 66, 68, 70 and 72 are activated to display these items. In step 330, the margin/tab position data $D_N$ is transferred to the fluorescent display memory 140, and the margin and tab positions are displayed by the fluorescent display tube 62. Let us assume here that the left margin, the tabs and the right margin are set at the 20th, 28th, 60th, 80th, 100th and 120th spaces, respectively. "20L 28T 60T 80T 100T 120R" need to be displayed by the tube 62. Since the tube 62 cannot display more than 20 characters at a time, "120R" cannot be displayed along with the other items of data. To display the item, "120R", the forward key 56 is repeatedly depressed, thus shifting the other items to the left, character by character. As the back space key 50 is repeatedly depressed, the items displayed by the tube 62 are shifted to the right, character by character. In step 335, the question is asked whether or not the printing format displayed by the tube 62 is suitable. If the answer to this question is NO, the format is corrected in step 340. More specifically, the mode selection switches 78, 80, 82, 84 and 86 are operated to change the items of format data, $A_N$, $B_N$ and $C_N$. The forward key 56 and back space key 50 are operated, thus shifting an incorrect character to the 20th character position of the tube 62; the correction key 48 is then depressed, thus erasing the incorrect character; and finally, the key assigned to the correct character is depressed, thereby inputting the correct character. When the printing format need not be corrected, or after it has been corrected, the return key 52 is depressed in step 345 to start the printing of the text $T_N$. Upon depression of the key 52, the message, "MEMORY XX PRINT OUT", where XX is the number of the text, is displayed by the tube 62 in step 350. In step 355, the text data $T_N$ is printed in the printing format registered in the text memory 132. Then, in step 360, the printing is finished.

With the embodiment of the present invention, both a text and a number assigned to the text are registered in the text memory. Similarly, a printing format suitable for the text and bearing the text number is written into the text memory. Hence, it is possible with this embodiment to print the same text in the same format on as many sheets of paper as desired if only the text number is designated by depressing one or two numeral keys. Moreover, the printing format is displayed on the mode control panel when the text number is designated. The typist can therefore determine whether or not the format is suitable for the job he wishes to print. If the format is not suitable, the typist can change the format to a new one which is better suited to the sheets of paper he is going to use. In other words, the same text may be printed in a format which is different from the one initially registered.

The present invention is not limited to the embodiment described above. Various changes and modifications can be made. For example, the various functions may be performed by operating keys other than those described in the embodiment described above. Furthermore, a variety of printing formats other than the format described above may be registered and used.

As mentioned above, the present invention provides an electronic typewriter with a memory which may store a plurality of texts and a plurality of printing formats specific to the respective texts and in which any printing format may be changed or corrected. The electronic typewriter according to the present invention can therefore print the same text in several different formats.

- 1 -                                                0117892

Claims:

1.   An electronic typewriter comprising:

a keyboard (12) having a plurality of keys for generating a key signal representing a character or function designated by a key depressed;

memory means (104) for storing a text as data consisting of key signals from said keyboard (12);

characterized by further comprising

format registering means (14) for writing into said memory means (104) a printing format suitable for the text;

printing means (130) for printing the text stored in said memory means (104) using the printing format also stored in said memory means (104); and

display means (62) for displaying the printing format before the printing of the text so that the printing format may be changed or corrected by operating said format registering means (14).

2.   An electronic typewriter according to claim 1, characterized in that said memory means (104) stores texts, text numbers assigned to the respective texts, and printing formats suitable for the respective texts and bearing the respective text numbers.

3.   An electronic typewriter according to claim 2, characterized in that said display means (62) displays the number of characters which may be written into said memory means.

4.   An electronic typewriter according to claim 1, characterized in that said printing format represents a print mode, a line space, a type pitch, a weight of type, a right margin control mode, margin positions and tab positions.

F I G. 1

# FIG. 2

Typewriter    TW-3000

NORMAL
AUTOCR
RIGHT

TPWR
WORD
LINE
STOR
EDIT

KBI
KBII

MARGIN RELEASE

DEC TAB

1 2 3 4 5 6 7 8 9 0 - =

BACK SPACE

EXP

FWD

LEFT MARGIN

PAPER SET

TAB

Q W E R T Y U I O P ¼½

REV INDEX

MEM ORY

RIGHT MARGIN

CODE

LOCK

A S D F G H J K L

RETURN

INDEX

FORM

TAB SET

SHIFT

Z X C V B N M

SHIFT

CENTR

STOP CODE

TAB CLEAR

REPEAT

X

RELOC

CALL

F I G. 3

0117892

# F I G.  4

| TEXT MEMORY |
|---|

$T_{N-1}$

| E | $A_N$ | $B_N$ | $C_N$ |
|---|---|---|---|

| $D_N$ | ES |
|---|---|

$T_N$

| E | $A_{N+1}$ | $B_{N+1}$ | $C_{N+1}$ | $D_{N+1}$ |
|---|---|---|---|---|

| ES |
|---|

$T_{N+1}$

(132)

| START ADDRESS MEMORY |
|---|

| $TST_0$ | $TST_1$ | $TST_2$ | $TST_3$ |
|---|---|---|---|

| $TST_{96}$ | $TST_{97}$ | $TST_{98}$ | $TST_{99}$ |
|---|---|---|---|

(134)

| PRINTING BUFFER MEMORY | ~136 |
|---|---|

| LED DISPLAY MEMORY | ~138 |
|---|---|

| FLUORESCENT DISPLAY MEMORY | ~140 |
|---|---|

# F I G. 5

# F I G. 6

European Patent
Office

**EUROPEAN SEARCH REPORT**

| | DOCUMENTS CONSIDERED TO BE RELEVANT | | EP 83106384.7 |

| Category | Citation of document with indication. where appropriate, of relevant passages | Relevant to claim | CLASSIFICATION OF THE APPLICATION (Int. Cl ³) |
|---|---|---|---|
| X | DE - A1 - 3 046 037 (OLYMPIA WER-KE AG)  * Totality * | 1-4 | B 41 J   5/44 |
| | | | B 41 J   3/46 |
| | | | B 41 J  25/02 |
| X | FR - A1 - 2 505 737 (CANON KK)  * Claim; fig. 20 * | 1-4 | |
| X | DE - B2 - 1 961 173 (IBM)  * Claims; fig. 1-3 * | 1-4 | |
| A | GB - A - 1 516 816 (IBM)  * Totality * | 1-4 | |

**TECHNICAL FIELDS SEARCHED (Int. Cl. ³)**

B 41 J

The present search report has been drawn up for all claims

| Place of search | Date of completion of the search | Examiner |
|---|---|---|
| VIENNA | 18-05-1984 | WITTMANN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82